# EUROPÄISCHE PATENTSCHRIFT

(11) **EP 4 646 589 B1**
(45) Veröffentlichungstag und Bekanntmachung des Hinweises auf die Patenterteilung: **07.10.2026**
(21) Anmeldenummer: 24704326.8
(22) Anmeldetag: 31.01.2024
(51) Int. Cl.: G01N 29/04, G01N 29/12

(54) **VERFAHREN ZUR PRÜFUNG EINER ELEKTRONISCHEN BAUGRUPPE SOWIE ELEKTRONISCHE BAUGRUPPE**
METHOD FOR TESTING AN ELECTRONIC ASSEMBLY AND ELECTRONIC ASSEMBLY
PROCÉDÉ DE CONTRÔLE D'UN MODULE ÉLECTRONIQUE ET MODULE ÉLECTRONIQUE

(30) Priorität: 28.02.2023 EP 23159090
(43) Veröffentlichungstag der Anmeldung: 12.11.2025
(73) Patentinhaber: Siemens Aktiengesellschaft, 80333 München (DE)
(72) Erfinder: BICKEL, Heinz Dietrich Philipp, 81677 München (DE); KRIEGEL, Kai, 81739 München (DE); MITIC, Gerhard, 81827 München (DE); STEGMEIER, Stefan, 81825 München (DE); WALBRECKER-BAAR, Christian, 85757 Karlsfeld (DE)
(74) Vertreter: Siemens Patent Attorneys
(86) Internationale Anmeldenummer: PCT/EP2024/052362
(87) Internationale Veröffentlichungsnummer: WO 2024/179764

(56) Entgegenhaltungen:
- US-A1- 2014 124 878
- US-A1- 2020 182 930

## Beschreibung

Die Erfindung betrifft ein Verfahren zur Prüfung einer elektronischen Baugruppe sowie eine elektronische Baugruppe.

Bei der Fertigung elektronischer Baugruppen, insbesondere nach der Bestückung von Schaltungsträgern für elektronische Baugruppen, bleibt eine Qualitätskontrolle der elektronischen Baugruppe auf Fertigungsfehler zu unternehmen. Regelmäßig auftretende Fertigungsfehler sind Defekte. Solche Defekte sind insbesondere großflächige Lunker in Lötverbindungen, Leiterplattenverwölbungen, unzureichende Lötstellenkontaktierungen, Delaminationen von Leitermaterialien in Leiterplatten, Flussmittelrückstände, Chipverdrehungen sowie mangelhafte Laserschweißverbindungen von metallischen Lastanschlüssen.

Es ist bekannt, elektronische Baugruppen, wie insbesondere bestückte Schaltungsträger, mittels optischer Bildgebung und/oder elektrischer Prüfung auf mögliche Defekte zu untersuchen. Allerdings ist eine optische Qualitätskontrolle mittels automatisierter Bildgebung hinsichtlich einiger Defekte noch nicht hinreichend zuverlässig. Insbesondere Leiterplattenverwölbungen sind mittels optischer Bildgebung nur schwer zu erkennen.

Auch großflächige Lunker, Delaminationen von Leitermaterialen in Leiterplatten sowie mangelhafte Laserschweißverbindungen von metallischen Lastanschlüssen lassen sich optisch und elektrisch noch nicht hinreichend zuverlässig erkennen.

Aber auch im Betrieb elektronischer Baugruppen, insbesondere leistungselektronischer Baugruppen, bleibt eine Qualitätskontrolle erforderlich, da betriebsbedingte beziehungsweise alterungsbedingte Fehler auftreten. Vor allem durch betriebsbedingte Temperaturzyklen altern leistungselektronische Systeme wie beispielsweise Leistungsmodule. Thermisch stark belastete leistungselektronische Systeme und deren Leistungsschaltmodule, beispielsweise IGBT-Module, unterliegen einer merklichen Alterung durch den normalen Betrieb innerhalb ihrer spezifizierten Betriebsgrenzen IGBT-Module werden etwa in leistungselektronischen Umrichtern eingesetzt.

Diese Alterung wird hauptsächlich durch eine hohe Zahl von Lastzyklen der Betriebserwärmung und -abkühlung hervorgerufen, die zur allmählichen Zerstörung von Chiplotschichten unter den Halbleiterchips und zur Ermüdung von Bonddrähten und Chipmetallisierungen führen, die den Strom in die schaltenden und gleichrichtenden Chips leiten. Typische Fehlermechanismen sind der Bond Lift-Off, das heißt das Abheben bis hin zum Riss des Bonddrahtes, der Heel-Crack und die Lotermüdung von Chip- und Systemlot, welches das unterliegende Lot des Keramikträgers umfasst. Ein Problem ist unter anderem, dass der Zeitpunkt eines Ausfalles so stark und in so komplizierter Weise von den vergangenen Belastungen abhängt, dass auch fortgeschrittene Vorhersagemodelle sehr ungenau sind.

Daneben finden auch Alterungen in der Chip-Peripherie aufgrund der Temperaturschwankungen statt. So kann einerseits der Schaltungsträger (DCB, AMB) aufgrund der unterschiedlichen Ausdehnungskoeffizienten (Keramik/Kupfer) über einem Muschelbruch zerstört werden und andererseits die darüberliegenden Treiberansteuerung, insbesondere bei zukünftigen integrierten Leistungsmodulen.

Heute werden beispielsweise modellbasierte Schätzverfahren eingesetzt, bei denen der Alterungsgrad in Leistungshalbleitermodulen über thermische Lebensdauermodelle bestimmt wird. Durch beschleunigte Lebensdauertests ergibt sich eine Anzahl thermischer Zyklen, die ein Modul ohne signifikante Degradation und Ausfälle aushalten muss. Damit kann im späteren Betrieb des Moduls über eine Temperaturmessung eine beanspruchungsbasierte Vorhersage der Restlebensdauer erreicht werden. Die Degradation wird dabei nur indirekt nachgewiesen. Der Temperaturhub und das Lastprofil können sich in der Praxis von den Temperaturzyklen erheblich unterscheiden. Dadurch schränkt sich die Genauigkeit des thermischen Lebensdauermodells ein.

Eine weitere Möglichkeit ist die Impedanzspektroskopie, bei der die thermische Impedanz des Modulaufbaus bestimmt wird. Hierbei wird ein elektronischer Schalter als Heizelement und als Sensor genutzt. Diese Messung kann nur durchgeführt werden, wenn das System nicht im Betrieb ist. Ein weiterer Ansatz ist die Verzerrungsmessung mit elektrischer Anregung, die durch Grenzflächen und Übergänge entstehen. Diese Messungen werden mit Hochfrequenzsignalen auch im Betrieb durchgeführt. Die Ergebnisse bedürfen einer Interpretation, weil die Signale sehr klein sind.

In schwer zugänglichen oder dauerbetriebenen Einsatzgebieten, in denen ein Ausfall eines Umrichters unbedingt vermieden werden muss, z.B. Windumrichter off-shore oder bei Traktionsanwendungen, gibt es heute verschiedene Lösungswege, einen überraschenden Betriebsstillstand weitestgehend organisatorisch zu vermeiden. So kann durch Redundanz der Leistungselektronik oder durch Maßnahmen auf der Wartungsebene, etwa durch präventiven Austausch der Leistungsmodule, spontanen Stillständen begegnet werden.

Mit Hilfe von fortgeschrittenen thermischen Modellen auf Basis von vorherigen, beschleunigten Lebensdauerprüfungen kann dabei auf die zu erwartende und die bereits verbrauchte Lebensdauer geschlossen werden. Aufgrund der hohen Komplexität der Abhängigkeiten sind diese Berechnungen jedoch nach wie vor mit sehr großen Fehlern behaftet.

Von einigen Leistungsmodulherstellern werden IGBT-Leistungsschaltmodule angeboten, in deren IGBTs kleine Messdioden als Temperatursensor integriert sind. Über die wachsende Temperaturerhöhung des IGBTs bei gegebenem Betriebsstrom lässt sich dann indirekt auf eine (Lot-) Alterung schließen. Dies geht jedoch mit Chipflächeneinbußen und höheren Chipkosten einher.

Alternativ zur Verbauung von Temperatursensorik ist eine Messmethode bekannt, bei der temperatursensitive Parameter aufgenommen werden. Die Gate-Emitter-Spannung *U_{GE}* oder die Collector-Emitter-Spannung *U_{CE}* beispielsweise lassen auf Degradationen in den Aufbauschichten des Moduls schließen. Auch der zeitliche Verlauf des Einschalt-Stroms lässt einen Rückschluss auf den Alterungsgrad zu. Durch die Änderung des thermischen Widerstands durch Delaminationen und Risse in der Chiplotschicht ändern sich die genannten elektrischen Parameter. Die Messungen sind im Allgemeinen sehr aufwendig, da hohe Messgenauigkeiten und hohe zeitliche Auflösungen benötigt werden, die sich oftmals nur unter Laborbedingungen realisieren lassen.

Auch eine Verbauung von Sensorik zur Ermittlung von Defekten mittels sonischer Kommunikation ist bekannt, zum Beispiel aus der US 2020/182930 A1, wobei auch dieser Lösungsansatz mit Chipflächeneinbußen oder zusätzlich erforderlichem Bauraum einhergeht.

Vor diesem Hintergrund des Standes der Technik ist es daher Aufgabe der Erfindung, ein verbessertes Verfahren zur Prüfung einer elektronischen Baugruppe sowie eine elektronische Baugruppe zur Ausführung dieses verbesserten Verfahrens zu schaffen. Insbesondere soll mit dem erfindungsgemäßen Verfahren zur Prüfung einer elektronischen Baugruppe eine einfache, kostengünstige und zuverlässige Prüfung der elektronischen Baugruppe möglich sein.

Diese Aufgabe der Erfindung wird mit einem Verfahren zur Prüfung einer elektronischen Baugruppe mit den in Anspruch 1 angegebenen Merkmalen sowie mit einer elektronischen Baugruppe zur Ausführung eines solchen Verfahrens mit den in Anspruch 11 angegebenen Merkmalen gelöst.

Bevorzugte Weiterbildungen der Erfindung sind in den zugehörigen Unteransprüchen, der nachfolgenden Beschreibung und der Zeichnung angegeben.

Das erfindungsgemäße Verfahren zur Prüfung eine elektronischen Baugruppe umfasst zumindest die folgenden Schritte: Wenigstens ein piezoelektrisches Halbleiterbauteil der zu prüfenden elektronischen Baugruppe wird mittels elektrischer Spannungsanregung zur Erzeugung von Schallwellen angeregt, welche in die zu prüfende elektronische Baugruppe eingekoppelt werden. Und wenigstens ein weiteres piezoelektrisches Halbleiterbauteil der zu prüfenden elektronischen Baugruppe fungiert als Empfänger und misst die über die zu prüfende elektronische Baugruppe übertragenen Schallwellen.

Das erfindungsgemäße Verfahren nutzt dabei piezoelektrische Eigenschaften von Halbleitern, sogenannten Wide-Band-Gap-Halbleitern, wie beispielsweise Siliziumcarbid- (SiC) oder Galliumnitrid-Halbleiter (GaN). Die so erzeugten Schallwellen weisen insbesondere Frequenzen im kHz-Bereich auf, beispielsweise ab 10 kHz. Insbesondere werden Ultraschallwellen mit Frequenzen ab ca. 20 kHz für das Prüfungsverfahren genutzt. Die über eine Spannungsanregung erzeugte mechanische Schwingung des Halbleiterbauteils, werden Schallwellen in die Baugruppe eingekoppelt und breiten sich darin aus. Der Empfänger-Chip wird mittels der ihn erreichenden Schallwellen seinerseits in mechanische Schwingung versetzt, welche dann wiederum in ein elektrisches Signal umgewandelt und ausgewertet wird. Die gesamte elektronische Baugruppe fungiert dabei als Feder-Masse-System, über das die Schallwellen transportiert werden. Bevorzugt wird das so empfangene Signal mit einem Referenzsignal abgeglichen. Das Referenzsignal wird bevorzugt mittels Charakterisierung eines intakten Moduls bestimmt, beispielsweise durch Auswerten von elektrischen Signalgrüßen zwischen piezoelektrischen Bauteilen eines intakten Moduls.

Diese piezoelektrischen Halbleiterbauteile können also grundsätzlich als Sender und Empfänger von Schallwellen fungieren. Die Detektion erfolgt über Abnahme eines elektrischen Signals am Halbleiterbauteil, welches durch die empfangenen Schallwellen angeregt wird. Bei dem Verfahren werden Halbleiterbauteile einer elektronischen Baugruppe mit doppelter Funktion eingesetzt. Beispielsweise fungiert eine Diode zusätzlich als Sender, ein Transistor zusätzlich als Empfänger für die Prüfungsschallwellen. Hieraus ergibt sich ein besonderer Vorteil des Verfahrens, dass es ohne baulichen Mehraufwand an elektronischen Baugruppen mit mindestens zwei piezoelektrischen Halbleiterbauteilen anwendbar ist. Das heißt, die bereits in Modulen verwendeten Halbleiterchips können durch ihre Piezoeigenschaften zusätzlich als Sender und als Empfänger der Schallwellen genutzt werden.

Ein weiterer Vorteil des erfindungsgemäßen Verfahrens ist demnach die Möglichkeit einer Zustandsüberwachung, auf der eine Restlebensdauerbestimmung basieren kann. Es werden ungeplante Ausfälle vermieden und eine vorausschauende Wartung ermöglicht. Des Weiteren ergibt sich der Vorteil eine kommerzielle Lösung für die Zustandsüberwachung von gesamten Leistungsmodulen in Umrichtern anbieten zu können, die im Hinblick auf eine Lebensdauerprognose nutzbar ist. Die durch die angegebene Qualitätskontrolle vorteilhaft zu detektierenden Fehler sind insbesondere Defekte, wie beispielsweise Materialdefekte, die nach der Herstellung aber besonders alterungsbedingt auftreten können. Insbesondere durch zu hohe Bauteiltemperaturen und besonders durch Temperaturwechsel, werden Schäden hervorgerufen, die sehr sicher mit dem beschriebenen Verfahren detektiert werden können. Demnach ist das erfindungsgemäße Verfahren zwar auch sehr gut geeignet für die Bauteil- oder Baugruppen-Prüfung nach der Fertigung, vorteilhafterweise wird es auch basierend auf den Ergebnissen einer Prüfung nach Fertigung zur Alterungsvorhersage und Ausfallrisikoabschätzung herangezogen. Besonders vorteilhaft am Verfahren ist dessen Einsatzmöglichkeit im Betrieb der elektronischen Baugruppe. Eine im Betrieb vornehmbare Prüfung und auch wiederholt vornehmbare Prüfung birgt besondere Vorteile für eine daraus ableitbare Alterungsvorhersage beziehungsweise Ausfallrisikoabschätzung.

Ein weiterer Vorteil des erfindungsgemäßen Verfahrens liegt beispielsweise darin, dass die Messung nicht nur während des Betriebs und wiederholt während des Betriebs möglich ist, sondern sogar eine kontinuierliche Messung der Alterung ermöglicht wird. So kann der Zustand eines gesamten Modulaufbaus kontinuierlich im Betrieb gemessen werden können, und es können notwendige Maßnahmen daraus abgeleitet werden. Diese Lösung ist kommerziell einsetzbar für die Zustandsüberwachung von gesamten Leistungsmodulen in Umrichtern. Das angegebene Qualitätsprüfungsverfahren ist im Hinblick auf eine Lebensdauerprognose belastbar.

Das Verfahren ermöglicht eine verbesserte, nicht-destruktive, verlässlichere, im Bauteilbetrieb vornehmbare Detektion von alterungsbedingten Schäden oder Delaminationen an einer leistungselektronischen Baugruppe sowie an einzelnen Bauteilen dieser Baugruppe, insbesondere Leistungsmodulen leistungselektronischer Geräte.

Das erfindungsgemäße Verfahren zur Prüfung einer elektronischen Baugruppe hat des Weiteren den Vorteil, dass die Baugruppe und Bauteile der Baugruppe auch an optisch nicht zugänglichen Bereichen auf Fertigungsfehler nach der Bestückung untersucht werden kann.

Bei der elektronischen Baugruppe handelt es sich insbesondere um eine leistungselektronische Baugruppe, zum Beispiel ein Leistungsmodul. Eine elektronische Baugruppe umfasst wenigstens ein Bauteil, insbesondere ein Halbleiter-Bauelement, z.B. einen Leistungsschalter. Der Aufbau einer elektronischen Baugruppe umfasst demnach unterschiedliche Schichten und allgemein unterschiedliche Materialien, welche auch mittels unterschiedlicher Herstellungsverfahren erzeugt und zusammengefügt werden. Unter materiellen Änderungen können Schäden, Delaminationen, Risse, und allgemein Materialalterung verstanden werden.

Typische Bauelemente der Leistungselektronik sind beispielsweise: bipolare Leistungstransistoren wie Schaltnetzteile und DC/DC-Wandler, Leistungs-MOSFET, IGBTs, insbesondere Schaltnetzteile, Motorsteuerungen und Umrichter, außerdem Thyristoren, insbesondere Stromrichter, Halbleiterrelais, Impulsstromquellen, Ansteuerungen von Thyristoren, GTO-Thyristoren, das sind Stromrichter großer Leistung, des Weiteren Triacs, insbesondere Dimmer oder Halbleiterrelais, außerdem Dioden zur Gleichrichtung und als Freilaufdioden beispielsweise Schottkydioden oder Siliziumdioden, schließlich Leistungskondensatoren.

Einsatzgebiete der Leistungselektronik können beispielsweise sein, Schaltnetzteile, Frequenzumrichter, Hochfrequenzgeneratoren, Gleichstromsteller, Phasenanschnittsteuerungen, Hochspannungs-Gleichstromübertragung, Wechselrichter oder Halbleiter-Relais.

In einer vorteilhaften Ausgestaltung der Erfindung wird in dem Verfahren zur Prüfung einer elektronischen Baugruppe die Erzeugung der Schallwellen über einen Spannungsimpuls erwirkt. Daraus ergibt sich auch eine Sprungantwort beim Empfänger.

In einer weiteren vorteilhaften Ausführungsform des erfindungsgemäßen Verfahrens erfolgt die Erzeugung der Schallwellen durch eine kontinuierliche elektrische Spannungsanregung. Diese kann beispielsweise durch eine Wechselspannung im kHz-Bereich, bevorzugt im Bereich zwischen 5 kHz und 30 kHz, insbesondere 10 kHz, 11 kHz oder 12 kHz erfolgen. Beispielsweise kann auch eine Anregung von Ultraschallwellen in einem Frequenzbereich ab 20 kHz erfolgen.

Die Anregung erfolgt dabei bevorzugt nicht mit der Resonanzfrequenz, sondern in der Nähe der Resonanzfrequenz, um ebenso wie bei Piezoaktoren den Aufbau nicht zu beschädigen. Der Halbleiterchip bildet mit dem Lot, dem Substrat und weiteren Elementen des Elektronikmoduls ein Feder-Masse-Schwingsystem. Die Resonanzfrequenz hängt neben der Geometrie, der Chipdicke und der Masse auch von der Steifigkeit und mechanischen Dämpfung ab. Die Resonanzfrequenz ist daher im Bereich zwischen 10 kHz und mehreren 100 kHz zu erwarten. Die Bestimmung der Resonanzfrequenz und der Moden erfolgt daher zweckdienlicherweise bauteilspezifisch. Bei der Verbindung des Halbleiterchips durch Sintern ergibt sich eine geringere Dämpfung als bei einer Anbindung durch ein Lot, wodurch die Resonanzfrequenz in einem höheren Bereich zu erwarten ist. Die Verbindung durch Sintern kann in Bezug auf die Detektion von Anomalien und Degradationen vorteilhaft genutzt werden, da insbesondere Ultraschallwellen durch eine geringere Dämpfung besser in die Baugruppe eingekoppelt werden können.

In einer weiteren vorteilhaften Variante des erfindungsgemäßen Verfahrens erfolgt die Anregung mit unterschiedlichen Wechselspannungsfrequenzen. Insbesondere wird ein Frequenz-Sweep über mehrere Frequenzen durchgeführt, insbesondere wenigstens zwei unterschiedliche Frequenzen. Beispielsweise wird zunächst der signalaussendende Halbleiterchip mit 10 kHz Wechselspannung angeregt und ein anderer Halbleiterchip misst die übertragene mechanische Schwingung bzw. den Schall. Danach wird mit 11 kHz und nachfolgend beispielsweise noch mit 12 kHz Wechselspannung angeregt und das empfangene Signal abgegriffen. Wenn sich nun in der Anbindungsschicht, insbesondere einer Lotschicht oder Sinterschicht, des Halleiterbauteils an die Baugruppe Defekte, insbesondere Alterungsrisse oder Delaminationen gebildet haben, ist dies im empfangenen Schallsignal sichtbar. Sowohl bei einem Frequenz-Sweep als auch bei der Impulsanregung ist durch eine Änderung des Feder-Masse-Systems, was auch kleinste Änderungen sein können, eine Veränderung im Empfangssignal zu erwarten. Das Referenzsignal für ein charakteristisches Schall-Übertragungsverhalten kann anhand elektrischer Signalgrüße für ein intaktes Leistungsmodul bestimmt werden.

In einer weiteren vorteilhaften Ausgestaltung der Erfindung umfasst das Verfahren zur Prüfung einer elektronischen Baugruppe eine Kombination von elektrischen Anregungsverfahren. Insbesondere werden ein Spannungsimpuls zusätzlich zu einer kontinuierlichen elektrischen Spannungsanregung auf das schallwellenerzeugende Halbleiter-Bauteil gegeben. Alternativ kann eine kontinuierliche elektrische Spannungsanregung mit unterschiedlichen Wechselspannungen erfolgen und es kann auch bei unterschiedlichen Wechselspannungen ein zusätzlicher Spannungspuls erfolgen. Durch eine derartige Kombination der elektrischen Anregungsverfahren und demnach der Vielzahl an piezoelektrischen Antworten am Empfängerbauteil ergibt sich eine noch verlässlichere Ermittlung von Defekten. Bei der Auswertung der Signalantwort mit einer Step-Funktion, wird beispielsweise eine Fourier-Transformation zur Bestimmung der Eigenfrequenz vorgenommen.

Insbesondere erfolgt in einer weiteren vorteilhaften Variante des Verfahrens eine zeitaufgelöste Messung des Schallsignals, sodass zusätzlich zur Signaldispersion auch Signallaufzeiten ermittelt werden. Dies hat den Vorteil, dass anhand der Signallaufzeiten eine erste örtliche Eingrenzung eines detektierten Defekts vorgenommen werden kann.

Bevorzugt wird in einer vorteilhaften Ausgestaltung des Prüfungsverfahrens wenigstens eine zweite Messung durch einen zweiten Empfänger, einen dritten Halbleiterchip vorgenommen. Bevorzugt werden also wenigstens ein piezoelektrischen Halbleiterchip als Sender und wenigstens zwei piezoelektrischen Halbleiterchips als Empfänger verwendet. Diese werden bevorzugt permutiert als Sender und Empfänger eingesetzt, d.h. das auch der zweite Chip als Sender mit erstem und drittem Chip als Empfänger kommuniziert sowie der dritte Chip als Sender mit dem ersten und zweiten Chip als Empfänger.

Besonders bevorzugt werden mindestens vier piezoelektrischen Halbleiterchips auf dem Schaltungsträger als Schallwellensender und -empfänger eingesetzt. Insbesondere werden alle in der Baugruppe verfügbaren Halbleiterbauteile mit piezoelektrischen Eigenschaften in diese Permutation mit einbezogen. Mittels dieser Multi-Chip-Sensorik ist eine Vielzahl an Messungen möglich. In dem jeder geeignete auf der Baugruppe verbaute Chip wenigstens einmal als Sender und für jeden weiteren verbauten Chip als Empfänger fungiert, kann dieses kombinatorische Messverfahren den Vorteil entfalten, ermittelte Defekte in der Baugruppe ortsaufgelöste zu detektieren.

In einer weiteren vorteilhaften Ausführungsform des erfindungsgemäßen Verfahrens werden zusätzlich Oberflächenwellen, die sich vom angeregten Halbleiterchip aus über die Oberfläche der Anbindungsschicht ausbreiten, gemessen. Dies erfolgt zweckdienlicherweise mittels eines SAW-Filters (Surface A-coustic Waves). Die Anbindungsschicht, insbesondere elektrische Anbindungsschicht, mittels der das Halbleiterbauteil auf den Schaltungsträger aufgebracht ist, überträgt zum einen die Schallwellen an die Baugruppe, worin sie sich als Volumenwelle ausbreiten. In der vorteilhaften Ausführungsform wird das so erhaltene Signal noch durch das Signal der registrierten Oberflächenwellen auf der Anbindungsschichtoberfläche ergänzt.

Die Alterung des Halbleiterkristalls erfolgt im Vergleich zu den Materialübergängen und Materialverbindungen in der Regel viel langsamer, doch auch diese Alterungserscheinung sowie andere intrinsische Veränderungen des Halbleiters lassen sich nach den beschriebenen Ausführungsformen des Verfahrens erfassen, da sich jede Änderung im Halbleiter auch in seinen piezoelektrischen Eigenschaften zeigt.

In einer weiteren vorteilhaften Ausgestaltung des erfindungsgemäßen Verfahrens wird zusätzlich eine optische Reflexionsmessung an der Halbleiterchip-Oberfläche vorgenommen. Insbesondere wird diese Reflexionsmessung mittels einer Laserdiode und einem entsprechenden Photodetektor vorgenommen, mittels welchem Vorgehen eine Art Laser-Doppler-Vibrometrie-Messung an der Halbleiterchip-Oberfläche vorgenommen wird, wobei der Halbleiterchip selbst als Piezoaktor fungiert.

Bei der Laser-Doppler-Vibrometrie werden Schwingungen punktuell auf einer Oberfläche gemessen. Insbesondere werden in der Entwicklung von Leistungshalbleiter-Modulen bei künstlichen Alterungstests mit dem Scanning-Vibrometer das Schwingungsverhalten für die verschiedenen Alterungsgrade analysiert. Typische Degradationserscheinungen durch die thermomechanische Alterung sind beispielsweise Risse in der Chiplotschicht oder den Bonddrähten. Diese Degradationserscheinungen haben wiederum Auswirkung auf das Schwingungsverhalten. Die Änderungen der Schwingungsmoden sind, abhängig von der Bauteilgeometrie, an bestimmten Stellen besonders ausgeprägt und messtechnisch erfassbar. Diese charakteristischen Stellen lassen sich mit dem Scanning-Vibrometer bereits im Entwicklungsprozess identifizieren. An diesen charakteristischen Stellen kann dann beispielsweise im späteren Endprodukt gezielt eine Messung vorgenommen werden, um auf die Degradation zu schließen.

Gemäß der vorteilhaften Ausgestaltung des erfindungsgemäßen Verfahrens mit zusätzlicher optischer Reflexionsmessung an der Halbleiterchip-Oberfläche, wird also beispielsweise eine elektronische Baugruppe, durch Spannungsanregung eines piezoelektrischen Aktors, insbesondere ein Halbleiter-Bauteil, in Schwingung versetzt. Die Anregung erfolgt als Puls oder mit einer bestimmten Frequenz. Die Halbleiterbauteile als Piezoaktoren sind dabei auf dem Substrat bzw. auf der Kupferschicht platziert bzw. über eine Anbindungsschicht, z.B. eine Sinterschicht oder Lotschicht daran angebunden.

Mittels lokaler Bestrahlung der schwingenden Bauteiloberfläche des Leistungsmoduls durch eine Laserdiode und Detektion der Dopplerverschiebung des kohärenten Lichtstrahls, der von der vibrierenden Bauteiloberfläche reflektiert wird, wird die Überlagerung des ausgesendeten und reflektierten Lichtstrahls nach dem Prinzip der Laser Dopplerverschiebung zu einer charakteristischen optischen Interferenz, abhängig vom Material und der Anbindung des zu vermessenden Leistungsmodulabschnitts. Es bilden sich lokal unterschiedliche Schwingung aus. Die zugehörige Überlagerung der kohärenten Reflexe führt zu Interferenzen, die im Detektor erfasst werden. Abhängig von der thermomechanischen Alterung des Leistungsmoduls ändern sich diese lokalen Schwingungsmodi, die in veränderten Interferenzmustern resultieren. Das Interferenzsignal erlaubt insbesondere lokale Schwingungsveränderungen zu detektieren, welche aus einer thermomechanischen Alterung der Aufbau- und Verbindungsschichten, z.B. Lote, Sinterschichten, Bondungen etc. resultieren.

Bei beispielsweise gepulster Anregung erlaubt das zeitliche Abklingen des Interferenzsignals Rückschlüsse auf Schädigungen, die mechanische Schwingungen lokal durch Absorption dämpfen z.B. Risse oder Materialermüdungen. Die Signalauswertung des Photodetektors wird insbesondere entweder durch eine Elektronik innerhalb des Leistungsmoduls oder durch eine außerhalb liegende Elektronikeinheit realisiert. Bevorzugt wird auf bereits vorhandene Elektronikeinheiten des Leistungsmoduls zurückgegriffen, die entsprechend angepasst oder erweitert sein können.

Eine weiterführende Ausführungsform des vorbeschriebenen Verfahrens mit Reflexionsmessung, könnte insbesondere eine Variante der Scanning-Vibrometrie vornehmen, also ein Abrastern der zu vermessenden Oberfläche oder der Baugruppe, insbesondere einer Flachbaugruppe. Bei ansonsten gleicher Technik wird dabei eine Fläche abgefahren und die Schwingungen auf dieser Oberfläche mittels Laserreflexionen gemessen. Mittels derartig in Schwingung versetzten Bauteilen und mit der Methode der Scanning-Vibrometrie lassen sich Defekte und Anomalien auch unter deren Oberfläche des zu charakterisierenden Objekts erfassen.

Die erfindungsgemäße elektronische Baugruppe, insbesondere einer leistungselektronischen Baugruppe, ist ausgestaltet, ein Verfahren nach einer der vorhergehend beschriebenen Ausführungsformen der Erfindung auszuführen. Die elektronische Baugruppe umfasst wenigstens ein piezoelektrisches Halbleiterbauteil, welches mittels elektrischer Spannung zur Erzeugung von Schallwellen anregbar ist und welches derart auf elektronischen Baugruppe aufgebracht ist, dass die erzeugten Schallwellen in die Baugruppe eingekoppelt werden. Des Weiteren umfasst die elektronische Baugruppe wenigstens ein weiteres piezoelektrischen Halbleiter-Bauteil, welches ausgestaltet ist als Schallwellenempfänger zu fungieren.

Insbesondere sind die piezoelektrischen Halbleiterbauteile dazu auf einem Substrat oder einer Schicht der Baugruppe durch eine Lot- oder eine Sinteranbindung befestigt. SinterAnbindungen sind besonders bevorzugt für das Verfahren in Kombination mit der Detektion der Oberflächenwellen. Auch eignen sich Sinteranbindungen sehr gut für die Einkopplung der Volumenwellen in die Baugruppe. Bei der Anbindung des Bauteils durch Sintern wird der Halbleiterchip bevorzugt direkt auf der Kupferschicht des Schaltungsträgers aufgebracht. Bei der Verbindung durch ein Lot übertragen sich die Schallwellen vom Halbleiterchip zunächst auf das Lot und dann auf die Kupferschicht. In beiden Fällen können die Oberflächenwellen ausgewertet werden, um auf Delaminationen oder Degradationen in der Lot- oder Sinterschicht zu schließen.

In einer vorteilhaften Ausgestaltung der erfindungsgemäßen elektronischen Baugruppe sind wenigstens drei, insbesondere mehr als drei piezoelektrischen Halbleiterbauteile umfasst. Dies hat den Vorteil ein kombinatorisches Multi-Chip-Sensorikverfahren gemäß der beschriebenen Variante des Prüfungsverfahrens ausführen zu können. Besonders bevorzugt umfasst die elektronische Baugruppe mehr als drei piezoelektrischen Halbleiterbauteile, die auf der Baugruppe verteilt angeordnet sind, insbesondere an unterschiedlichen Enden der Baugruppe angeordnet sind. Besonders bevorzugt sind wenigstens vier piezoelektrischen Halbleiterbauteile umfasst. Zweckdienlicher bei weist die elektronische Baugruppe Anbindungsschichten für die piezoelektrischen Halbleiterbauteile auf, welche besonders gut für eine direkte Schallsignaleinkopplung in das Feder-Masse-System der Baugruppe geeignet sind, insbesondere Sinteranbindungen.

In einer vorteilhaften Ausführungsform der Erfindung weist die elektronische Baugruppe wenigstens einen SAW-Filter zur Detektion von Oberflächenwellen auf, welcher zweckdienlicherweise in der Nähe eines piezoelektrischen Halbleiterchips auf bzw. in dessen Anbindungsschicht an die Baugruppe oder in der Kupferschicht der Baugruppe angebracht ist.

Alternativ oder zusätzlich kann auch ein SAW-Filter Oberflächenwellen detektieren, welche Rückschlüsse auf Schwingungsdämpfungseffekte durch Silikonvergüsse, Mold- oder Keramikvergüsse, eingesetzte Zementwerkstoffe oder Isolationsmaterialien zulassen. Die Kombination der piezoelektrischen Signale mit der Oberflächenwellendetektion führt zu besonders verlässlichen Ergebnissen.

In einer weiteren vorteilhaften Ausgestaltung der Erfindung ist die elektronische Baugruppe mit einer Laserdiode und einem Fotodetektor angeordnet. Damit ist wird eine Miniaturisierung eines Laser-Doppler-Vibrometers realisiert. Das Halbleiter-Bauteil fungiert selbst als Piezoaktor und versetzt sich und seine Oberfläche in Vibration. Der Fotodetektor nimmt die Interferenzmuster aus kohärentem eingestrahlten und reflektierten Laserstrahl auf. Diese Anordnung lässt sich besonders bevorzugt mit leistungselektronischen Baugruppen in einem planaren Aufbau realisieren. Weiterhin können zusätzlich Ultraschallspiegel oder Absorbermaterial in der Baugruppe eingebaut sein, um unerwünschte Reflexionen zu vermeiden. Weiterhin kann der Sender oder der Empfänger alternativ oder zusätzlich durch separat aufgebrachte Piezoelemente verstärkt werden. Bevorzugt ist die elektronische Baugruppe eine leistungselektronische Baugruppe und weist beispielsweise Halbleiterbauteile wie Leistungsschalter, MEMS-Bauteile, Dioden oder MOS-FETs (Metal Oxide Semiconductor Field-effect transistors) auf. Besonders bevorzugt weisen diese Halbleiterbauteile hierzu elektrische Eigenschaften auf, was typisch für sogenannte Wide Band Gap Halbleiter wie Galliumnitrit oder Siliziumcarbid ist. Die Chips dienen der Baugruppe demnach bevorzugt in doppelter Funktion, ihrer eigentlichen Funktion in der Baugruppe und zusätzlich als intrinsische Qualitätsprüfungseinheit, in der sie als Schallwellenerzeuger und - empfänger fungieren.

In einer besonders vorteilhaften Ausführungsform der elektronischen Baugruppe ist diese mit einer auswärtigen Einrichtung angeordnet, welche ausgebildet ist, mittels der erfassten elektrischen Signale aus der Schallwellendetektion über die als Empfänger fungierenden piezoelektrischen Halbleiterbauteile auf einen Defekt der elektronischen Baugruppe zu schließen. Besonders vorteilhaft ist die auswärtige Einheit mit der Baugruppe verbunden oder ebenfalls als Funktion in die Halbleiterchips integriert.

Beispiele und Ausführungsformen der vorliegenden Erfindung werden noch in exemplarischer Weise mit Bezug auf die Figuren 1 bis 3 der angehängten Zeichnung beschrieben:
Figur 1 zeigt schematisch einen Schnitt durch eine elektronische Baugruppe im planaren Aufbau.
Figur 2 zeigt schematisch eine Draufsicht auf eine elektronische Baugruppe mit einer Vielzahl an piezoelektrischen Halbleiterbauelementen.
Figur 3 zeigt schematisch einen Schnitt durch eine elektronische Baugruppe angeordnet mit Laserdiode und Fotodetektor.

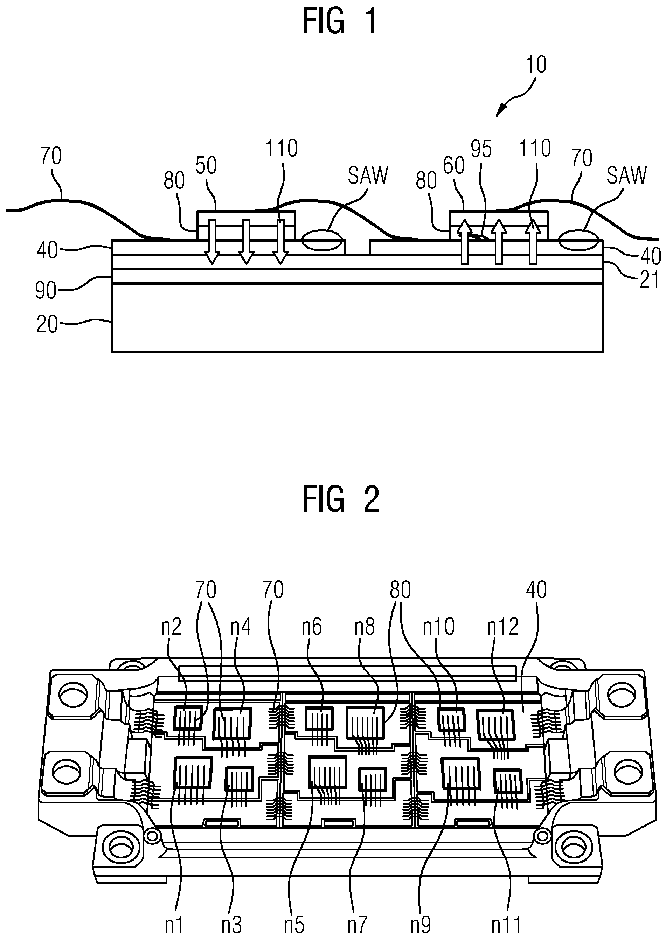

In der Figur 1 ist schematisch ein Schnitt durch eine Baugruppe 10 gezeigt, unten beginnend mit einer Kupferbodenplatte 20 darauf eine Verbundfläche 90, zum Beispiel eine Lotschicht über welche ein Substrat 21 angebunden ist, beispielsweise ein Keramiksubstrat. Auf dem Substrat 21 können sich verschiedene Abschnitte aus einer Metallbeschichtung 40 befinden, insbesondere Kupferschichten 40. Auf die Kupferschichten 40 sind verschiedene Halbleiterchips 50,60, wieder jeweils mittels einer Anbindungschicht 80 aufgebracht, wobei die elektrische Ankontaktierung der Bauelemente 50,60 an die Kupferschichten 40 wie in der Figur 1 gezeigt über Bonddrähte 70 erfolgt. Das beschriebene Verfahren wertet Volumenwellen aus, die sich wie in der Figur 1 über nach unten zeigende Pfeile 110 angezeigt vom einem ersten Halbleiterchip 50 aus, über die Anbindungsfläche 80, auf das Substrat 21 übertragen. Des Weiteren, über nach oben zeigende Pfeile 110 angezeigt, werden Volumenwellen an ein Empfänger-Bauteil 60 übertragen, indem sie in ein elektrisches Signal umgewandelt und detektiert werden. Exemplarisch ist in der Anbindungsschicht 80 des Empfängerbauteils 60 ein Defekt 95 gezeigt, welcher beispielsweise ein Riss in der Lotschicht 80 oder eine lokale Delamination der Lotschicht 80 sein kann. Die Bauteile 50,60 können beispielsweise ein Siliziumcarbid MOS-FET sein oder eine Galliumnitrid-Diode. Der erste Halbleiterchip 50 fungiert dabei zusätzlich zu seiner Transistorfunktion als mechanischer Schwingungsgeber, der zweite Chip 60 neben seiner Funktion als Diode als mechanischer Schwingungsaufnehmer.

Des Weiteren ist gezeigt, dass sich in der Kupferschichten 40 SAW-Filter für die Oberflächenwellen-Auswertung SAW befinden können. Diese sind in einem Leistungsmodul 10, wie in Figur 1 gezeigt, in der Nähe der Halbleiterchips 50,60, bevorzugt direkt in die Kupferfläche 40 integriert.

Alternativ kann der piezoelektrischen Aktor 50 ein MEMS-Bauteil sein.

Alternativ beziehungsweise um einen zweiten Messwert zu erhalten wird die Funktion umgedreht und die Diode 60 fungiert als Sender und der MOS-FET 50 als Empfänger.

Für die grundlegende Messung der Schallwellen 110, kann alle Funktionalität im Leistungsmodul 10 integriert vorliegen.

Die Anregung erfolgt als Puls oder mit einer bestimmten Frequenz. Auch die Oberflächenwellendetektion kann durch SAW-Filter, integriert in die Kupferfläche 40 des Schaltungsträgers erfolgen.

In Figur 2 ist eine Draufsicht auf ein Leistungsmodul 10 mit einer dreigliedrigen Anordnung gezeigt, welche insgesamt zwölf Halbleiterchips n1 bis n12 aufweist. Gezeigt sind auch die die Verbundflächen 80 mittels derer die Chips n1 bis n12 auf dem Kupfersubstrat 40 angebunden sind. Eine mögliche Alterungserscheinung durch Temperaturhübe sind beispielsweise Muschelbrüche in der Keramik 21 eines DCB-Substrats (Direct copper bonded substrate). Vor allem dafür aber auch für zuvor genannte Degradationen in den Verbindungsschichten 80 kann die kombinierte Auswertung an Signalen von verschiedenen Halbleiterchips n1 bis n12 auf dem Modul 10 einen noch besseren Rückschluss auf Degradationen 95 erlauben und eine örtliche Bestimmung der Defektstelle 95 ermöglichen. Wie in Figur 2 dargestellt, könnte dies beispielsweise mit Multi-Chip-Sensorik bezeichnet werden. Zuerst sendet Chip n1 und alle anderen Chips (n2 bis n12) nehmen den Schall 110 auf. Danach sendet Chip2 und alle anderen nehmen auf, usw.

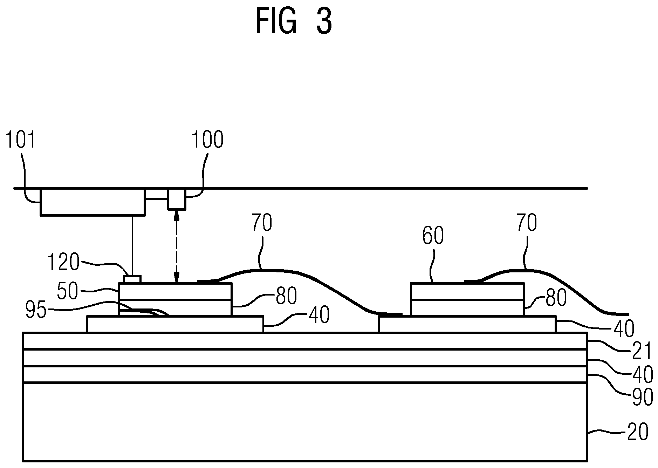

In Figur 3 ist schematisch gezeigt, wie zusätzlich eine Anordnung mit einer Laserdiode 100 oberhalb des Leistungsmoduls 10 erfolgen kann. Die Laserdiode 100 soll lokal die schwingende Bauteiloberfläche bestrahlen. Ein in der Nähe der sendenden Laserdiode 100 angebrachter Detektor 100 dient zur Messung der Dopplerverschiebung des kohärenten Lichtstrahls, der auf die vibrierende Bauteiloberfläche trifft und reflektiert wird. Die Überlagerung des erzeugten und reflektierten Lichtstrahls erfolgt nach dem Prinzip des Laser-Doppler-Vibrometers(LDV). Optische Interferenz entsteht immer dann, wenn sich kohärente Wellen überlagern. Abhängig vom Material und der Anbindung im Leistungsmodul 10 bilden sich lokal unterschiedliche Schwingungsmodi aus. Die zugehörige Überlagerung der kohärenten Reflexe führen zu Interferenzen, die im Detektor erfasst werden. Abhängig von der thermomechanischen Alterung des Leistungsmodules ändern sich diese lokalen Schwingungsmodi, die in veränderten Interferenzmustern resultieren.

Für die Messung der Interferenzen wird bevorzugt eine Laser-diode 100 mit einer Kohärenzlänge von mindestens 1cm eingesetzt. Das interferometrische Muster sollte bei Temperaturänderungen stabil bleiben (z.B. < 0,1 nm/K). Der verwendete Fotodetektor basiert auf Silizium, das nur für Wellenlängen von weniger als 1100 nm geeignet ist, bei denen das Silikongel des Leistungsmoduls 10 optisch transparent ist.

Das Interferenzsignal erlaubt lokale Schwingungsveränderungen zu detektieren, welche aus einer thermomechanischen Alterung der Aufbau- und Verbindungsschichten 80 (Lote, Bondungen etc.) resultieren. Bei gepulster Anregung erlaubt das zeitliche Abklingen des Interferenzsignals Rückschlüsse auf Schädigungen, die mechanische Schwingungen lokal durch Absorption dämpfen z.B. Risse oder Materialermüdungen. Die Signalauswertung des Photodetektors 100 wird entweder durch eine Elektronik innerhalb des Leistungsmoduls 10 oder durch eine außerhalb liegende Elektronikeinheit 101 realisiert. Bevorzug t wird dabei auf bereits vorhandene Elektronikeinheiten des Leistungsmoduls 10 zurückgegriffen, die entsprechend angepasst oder erweitert werden.

### Bezugszeichenliste:

110 Ultraschallschwingungen
120 Ultraschallquelle, z.B. elektrisch anregbare piezoelektrische Schicht
10 elektronische Baugruppe, Leistungsmodul
20 Kupferbodenplatte, Kupferkühlkörper oder allg. wärmeabführendes Substrat
21 Keramik-Substrat, insbesondere metallisch beschichtet
30 Flachseite
40 Kupferschicht
SAW SAW Filter
50 Halbleiterbauelement, z.B. SiC-MOS FET als mechanischer Schwingungsgeber
60 Halbleiterbauelement, z.B. Diode als mechanischer Schwingungsaufnehmer
70 Bonddrähte, Lötverbindungen
80 Lötschicht, Lot oder alternativ Sinterschicht
90 Lötschicht oder materialschlüssige Anbindung an Kühlkörper
95 lokale Fehlstelle, z.B. Riss in der (Chip-)Lotschicht
n1-n12 Halbleiterchips
100 Laserdiode und Detektor
101 Elektronik- und Auswerteeinheit

## Patentansprüche

1. Verfahren zur Prüfung einer elektronischen Baugruppe (10),
bei dem wenigstens ein piezoelektrisches Halbleiter-Bauteil (50, 60) der zu prüfenden elektronischen Baugruppe (10) in einer zusätzlichen Funktion als mechanischer Schwingungsgeber fungiert, in dem es mittels elektrischer Spannungs-Anregung zur Erzeugung von Schallwellen (110) angeregt wird, welche in die Baugruppe eingekoppelt werden,
und wenigstens ein weiteres piezoelektrisches Halbleiter-Bauteil (50, 60) der zu prüfenden elektronischen Baugruppe (10) in einer zusätzlichen Funktion als mechanischer Schwingungsaufnehmer fungiert und die über die elektronische Baugruppe übertragenen Schallwellen (110) empfängt,
und bei dem die piezoelektrischen Halbleiter-Bauteile (50, 60) Wide-Band-Gap-Halbleiter aufweisen.

2. Verfahren nach Anspruch 1, wobei die erzeugten Schallwellen (110) Frequenzen im kHz-Bereich aufweisen.

3. Verfahren nach Anspruch 1 oder 2, wobei die piezoelektrischen Halbleiter-Bauteile (50, 60) Leistungsschalter, MEMS-Bauteile, Dioden und/oder MOS-FETs (Metal Oxide Semiconductor Field-effect transistors) sind.

4. Verfahren nach einem der vorstehenden Ansprüche, wobei die Erzeugung der Schallwellen (110) über einen Spannungsimpuls und/oder durch eine kontinuierliche elektrische Spannungs-Anregung, insbesondere mit unterschiedlichen Wechselspannungsfrequenzen erfolgt.

5. Verfahren nach Anspruch 4, bei dem eine Kombination der elektrischen Anregungsverfahren erfolgt.

6. Verfahren nach einem der vorstehenden Ansprüche, bei dem eine zeitaufgelöste Messung des Schallsignals erfolgt, so dass zusätzlich zur Signaldispersion Signallaufzeiten ermittelt werden.

7. Verfahren nach einem der vorstehenden Ansprüche, bei dem wenigstens ein piezoelektrischer Halbleiterchip als Sender und wenigstens zwei piezoelektrische Halbleiterchips als Empfänger durchpermutiert werden.

8. Verfahren nach einem der vorstehenden Ansprüche, bei dem zusätzlich Oberflächenwellen, die sich vom Halbleiterchip aus über die Oberfläche der Anbindungsschicht ausbreiten, gemessen werden, insbesondere mittels SAW-Filter (SAW).

9. Verfahren nach einem der vorstehenden Ansprüche, bei dem eine optische Reflexionsmessung der Halbleiterchipoberfläche vorgenommen wird.

10. Verfahren nach Anspruch 9, bei dem mittels einer Laser-Diode eine Doppler-Vibrometrie-Messung an der Halbleiterchipoberfläche vorgenommen wird.

11. Elektronische Baugruppe, insbesondere leistungselektronische Baugruppe, welche ausgestaltet ist, ein Verfahren nach einem der vorhergehenden Ansprüche auszuführen, umfassend wenigstens ein piezoelektrisches Halbleiter-Bauteil (50, 60) welches mittels elektrischer Spannungs-Anregung zur Erzeugung von Schallwellen (110) anregbar ist und welches derart der elektronischen Baugruppe (10) aufgebracht ist, dass die erzeugten Schallwellen (110) in die Baugruppe (10) eingekoppelt werden, und umfassend wenigstens ein weiteres piezoelektrisches Halbleiter-Bauteil (50, 60), welches ausgestaltet ist als Schallwellenempfänger zu fungieren,
wobei die piezoelektrischen Halbleiter-Bauteile (50, 60) Wide-Band-Gap-Halbleiter aufweisen.

12. Elektronische Baugruppe nach Anspruch 11, umfassend wenigstens drei, insbesondere mehr als drei piezoelektrische Halbleiter-Bauteile (50,60).

13. Elektronische Baugruppe nach Anspruch 11 oder 12, umfassend wenigstens einen SAW-Filter.

14. Elektronische Baugruppe nach einem der Ansprüche 11 bis 13, angeordnet mit einer Laser-Diode und einem Fotodetektor.

15. Elektronische Baugruppe nach einem der Ansprüche 11 bis 14, angeordnet mit einer Auswerteinrichtung, welche ausgebildet ist, mittels der erfassten elektrischen Signale aus der Schallwellendetektion über die als Empfänger fungierenden piezoelektrischen Halbleiter-Bauteile (50, 60), auf einen Defekt der elektronischen Baugruppe (10) zu schließen.

## Claims

1. Method for testing an electronic assembly (10),
in which at least one piezoelectric semiconductor component (50, 60) of the electronic assembly (10) to be tested acts as a mechanical vibration generator in an additional function, in which it is excited by means of electrical voltage excitation to generate sound waves (110) that are coupled into the assembly,
and at least one further piezoelectric semiconductor component (50, 60) of the electronic assembly (10) to be tested acts as a mechanical vibration sensor in an additional function and receives the sound waves (110) transmitted via the electronic assembly,
and in which the piezoelectric semiconductor components (50, 60) have wide-bandgap semiconductors.

2. Method according to claim 1, wherein the generated sound waves (110) have frequencies in the kHz range.

3. Method according to claim 1 or 2, wherein the piezoelectric semiconductor components (50, 60) are power semiconductors, MEMS components, diodes and/or MOS-FETs (metal oxide semiconductor field-effect transistors).

4. Method according to one of the previous claims, wherein the generation of the sound waves (110) takes place via a voltage pulse and/or by way of a continuous electrical voltage excitation, in particular at different alternating voltage frequencies.

5. Method according to claim 4, in which the electrical excitation methods are combined.

6. Method according to one of the previous claims, in which a time-resolved measurement of the sound signal takes place, so that signal propagation times are ascertained in addition to the signal dispersion.

7. Method according to one of the previous claims, in which at least one piezoelectric semiconductor chip is permuted as a transmitter and at least two piezoelectric semiconductor chips are permuted as receivers.

8. Method according to one of the previous claims, in which surface waves that propagate from the semiconductor chip over the surface of the bonding layer are measured as well, in particular by means of SAW filters (SAW).

9. Method according to one of the previous claims, in which an optical reflection measurement of the semiconductor chip surface is carried out.

10. Method according to claim 9, wherein a Doppler vibrometry measurement is carried out on the semiconductor chip surface by means of a laser diode.

11. Electronic assembly, in particular a power electronic assembly, which is designed to execute a method according to one of the previous claims, comprising at least one piezoelectric semiconductor component (50, 60), which can be excited by means of electrical voltage excitation to generate sound waves (110) and which is attached to the electronic assembly (10) in such a way that the generated sound waves (110) are coupled into the assembly (10), and comprising at least one further piezoelectric semiconductor component (50, 60), which is designed to act as a sound wave receiver, wherein the piezoelectric semiconductor components (50, 60) have wide-bandgap semiconductors.

12. Electronic assembly according to claim 11, comprising at least three, in particular more than three, piezoelectric semiconductor components (50, 60).

13. Electronic assembly according to claim 11 or 12, comprising at least one SAW filter.

14. Electronic assembly according to one of claims 11 to 13, arranged with a laser diode and a photodetector.

15. Electronic assembly according to one of claims 11 to 14, arranged with an evaluation device, which is designed to infer a defect in the electronic assembly (10) by means of the electrical signals acquired from the sound wave detection via the piezoelectric semiconductor components (50, 60) acting as receivers.

## Revendications

1. Procédé de contrôle d'un module (10) électronique,
dans lequel au moins un composant (50, 60) piézoélectrique à semiconducteur du module (10) électronique à contrôler fonctionne dans une fonction supplémentaire comme donneur d'oscillation mécanique, dans lequel il est, au moyen d'une excitation électrique en tension, excité pour la production d'ondes (110) sonores, qui sont injectées dans le module,
et au moins un autre composant (50, 60) piézoélectrique à semiconducteur du module (10) électronique à contrôler fonctionne dans une fonction supplémentaire comme récepteur d'oscillation mécanique et reçoit les ondes (110) sonores transmises par le module électronique,
et dans lequel les composants (50, 60) piézoélectriques à semiconducteur ont des semiconducteurs à grande bande interdite.

2. Procédé suivant la revendication 1, dans lequel les ondes (110) sonores produites ont des fréquences dans le domaine du kHz.

3. Procédé suivant la revendication 1 ou 2, dans lequel les composants (50, 60) piézoélectriques à semiconducteur sont un interrupteur de puissance, des composants MEMS, des diodes et/ou des MOSFETs (transistors à effet de champ métal oxyde semiconducteur).

4. Procédé suivant l'une des revendications précédentes, dans lequel la production des ondes (110) sonores s'effectue par une impulsion de tension et/ou par une excitation électrique en tension continue ayant, en particulier, des fréquences de tension alternative différentes.

5. Procédé suivant la revendication 4, dans lequel une combinaison des procédés électriques d'excitation a lieu.

6. Procédé suivant l'une des revendications précédentes, dans lequel on effectue une mesure résolue en fonction du temps du signal sonore, de manière à établir des temps de parcours du signal supplémentairement à la dispersion du signal.

7. Procédé suivant l'une des revendications précédentes, dans lequel on permute au moins une puce piézoélectrique à semiconducteur comme émetteur et au moins deux puces piézoélectriques à semiconducteur comme récepteurs.

8. Procédé suivant l'une des revendications précédentes, dans lequel on mesure, en particulier au moyen d'un filtre SAW (SAW) supplémentairement des ondes de surface, qui se propagent de la puce à semiconducteur par la surface de la couche de liaison.

9. Procédé suivant l'une des revendications précédentes, dans lequel on effectue une mesure optique de réflexion de la surface de la puce à semiconducteur.

10. Procédé suivant la revendication 9, dans lequel, au moyen d'une diode laser, on effectue une mesure de vibrométrie doppler sur la surface de la puce à semiconducteur.

11. Module électronique, en particulier module électronique de puissance, qui est conformé pour l'exécution d'un procédé suivant l'une des revendications précédentes, comprenant au moins un composant (50, 60) piézoélectrique à semiconducteur, qui peut, au moyen d'une excitation électrique en tension, être excité pour la production d'ondes (110) sonores et qui est appliqué au module (10) électronique de façon à injecter les ondes (110) sonores produites dans le module (10), et comprenant au moins un autre composant (50, 60) piézoélectrique à semiconducteur, qui est conformé pour fonctionner en récepteur d'ondes sonores, dans lequel les composants (50, 60) piézoélectriques ont des semiconducteurs à grande bande interdite.

12. Module électronique suivant la revendication 11, comprenant au moins trois, en particulier plus de trois, composants (50, 60) piézoélectriques à semiconducteur.

13. Module électronique suivant la revendication 11 ou 12, comprenant au moins un filtre SAW.

14. Module électronique suivant l'une des revendications 11 à 13, agencé avec une diode laser et un photodétecteur.

15. Module électronique suivant l'une des revendications 11 à 14, agencé avec un dispositif d'évaluation, qui est constitué pour, au moyen du signal électrique détecté, à partir de la détection d'ondes sonores sur les composants (50, 60) piézoélectriques à semiconducteur fonctionnant en récepteurs, décider d'un défaut du module (10) électronique.
